# EUROPEAN PATENT APPLICATION

(11) **EP 4 249 350 A1**
(43) Date of publication of application: **27.09.2023**
(21) Application number: 23159353.4
(22) Date of filing: 01.03.2023
(51) Int. Cl.: B62D 15/02, B60W 30/06, H04L 65/40

(54) **METHOD AND COMPUTER SYSTEM FOR CONTROLLING VEHICLE PARKING, MEDIUM, AND VEHICLE**

(30) Priority: 22.03.2022 CN 202210279424
(71) Applicant: Nio Technology (Anhui) Co., Ltd, Hefei City, Anhui 230601 (CN)
(72) Inventor: WANG, Yifei, Hefei City, Anhui, 230601 (CN); ZOU, Jiyong, Hefei City, Anhui, 230601 (CN)
(74) Representative: Vossius & Partner Patentanwälte Rechtsanwälte mbB

(57) **Abstract**

The disclosure relates to a method for controlling vehicle parking, a computer system for implementing the method, a computer storage medium, and a vehicle. The method for controlling vehicle parking according to an aspect of the disclosure includes the following steps: receiving, from a battery swap station, a vehicle parking state signal generated in real time in response to a vehicle starting to perform a parking operation; and performing a parking control operation based on the received vehicle parking state signal, where the parking control operation includes adjusting a parking path to guide the vehicle to an in-station predetermined battery swap area and stopping the parking operation.

## Description

### Technical Field

The disclosure relates to the field of electric vehicles, and more specifically, to a method for controlling vehicle parking, a computer system for implementing the method, a computer storage medium, and a vehicle.

### Background Art

At present, there are two main modes of energy supply for a battery electric vehicle: vehicle charging and battery replacement. In the vehicle charging mode, AC slow charging causes a long charging time and is limited by a parking place, while DC fast charging, though it shortens the charging time through a high power, has a great impact on a power grid and reduces the service life of the battery. In the battery replacement mode, the battery swap station can implement orderly charging by interacting with the power grid, and improve the comprehensive utilization efficiency of a power device, thereby quickly supplying energy to the electric vehicle, reducing waiting time of users, and not reducing the service life of the battery. Therefore, the battery replacement mode has high popularization value and economic significance in the urban public transportation field in China.

With the increasing intelligence degree of the battery swap station, the battery swap station has basically implemented automation and intelligence in many scenarios. However, a completely reliable detection mechanism and notification mechanism have not yet been established currently for the battery swap station for determining whether a vehicle entering the battery swap station can be parked in a proper battery swap position. For example, in a case where information about reference objects in an in-station scenario in the battery swap station is heavily homogenized and there are various mechanical structures and devices in the battery swap station, if the vehicle entering the battery swap station cannot be instructed to be parked in an appropriate battery swap position accurately in a timely manner, an improper parking operation of the vehicle may cause damage to the battery swap station (for example, the various mechanical structures and devices in the battery swap station) or the vehicle entering the battery swap station.

### Summary of the Disclosure

In order to solve or at least alleviate one or more of the above problems, the following technical solutions are provided.

According to a first aspect of the disclosure, a method for controlling vehicle parking is provided, including the following steps: receiving, from a battery swap station, a vehicle parking state signal generated in real time in response to a vehicle starting to perform a parking operation; and performing a parking control operation based on the received vehicle parking state signal, where the parking control operation includes adjusting a parking path to guide the vehicle to an in-station predetermined battery swap area and stopping the parking operation.

The method for controlling vehicle parking according to an embodiment of the disclosure further includes: adjusting the parking path when it is determined, based on the received vehicle parking state signal, that the vehicle is parked out of position, such that the vehicle enters the in-station predetermined battery swap area; or stopping the parking operation when it is determined, based on the received vehicle parking state signal, that the vehicle is parked in position; and sending an in-position parking signal to the battery swap station.

The method for controlling vehicle parking according to an embodiment or any one of the above embodiments of the disclosure further includes: adjusting the parking path when it is determined, based on the received vehicle parking state signal, that the vehicle is parked out of position; stopping the parking operation in response to determining that the vehicle cannot enter the in-station predetermined battery swap area by adjusting the parking path; sending a parking cancellation signal to the battery swap station and displaying the parking cancellation signal through a vehicle-machine interaction interface; and exiting the battery swap station to restart the parking operation.

According to the method for controlling vehicle parking in an embodiment or any one of the above embodiments of the disclosure, where the vehicle parking state signal is generated in the following manners: using one or more image collection devices arranged in the battery swap station to collect a wheel image of the vehicle; using a machine learning model to process the collected wheel image of the vehicle; and generating the vehicle parking state signal based on a processing result of the machine learning model.

According to the method for controlling vehicle parking in an embodiment or any one of the above embodiments of the disclosure, where the vehicle parking state signal indicates one or more of the following: in-position parking, out-of-position parking, a positional relationship between the vehicle and the in-station predetermined battery swap area, and a distance between the vehicle and the in-station predetermined battery swap area.

According to the method for controlling vehicle parking in an embodiment or any one of the above embodiments of the disclosure, where content indicated by the vehicle parking state signal is selected, based on a frequency of communication between the battery swap station and the vehicle, from a group consisting of one or more of the following: in-position parking, out-of-position parking, the positional relationship between the vehicle and the in-station predetermined battery swap area, and the distance between the vehicle and the in-station predetermined battery swap area.

According to the method for controlling vehicle parking in an embodiment or any one of the above embodiments of the disclosure, the content indicated by the vehicle parking state signal is selected in the following manners: when the frequency of communication between the battery swap station and the vehicle is within a first frequency range, the vehicle parking state signal indicates in-position parking and out-of-position parking; when the frequency of communication between the battery swap station and the vehicle is within a second frequency range, the vehicle parking state signal indicates in-position parking, out-of-position parking, and the positional relationship between the vehicle and the in-station predetermined battery swap area; and when the frequency of communication between the battery swap station and the vehicle is within a third frequency range, the vehicle parking state signal indicates in-position parking, out-of-position parking, the positional relationship between the vehicle and the in-station predetermined battery swap area, and the distance between the vehicle and the in-station predetermined battery swap area.

According to the method for controlling vehicle parking in an embodiment or any one of the above embodiments of the disclosure, the parking operation includes an automatic parking operation, a semi-automatic parking operation, and a manual parking operation.

The method for controlling vehicle parking according to an embodiment or any one of the above embodiments of the disclosure further includes: stopping the parking operation in response to not receiving, within a predetermined period of time, the vehicle parking state signal that indicates in-position parking; sending an alarm signal to the battery swap station and displaying the alarm signal through a vehicle-machine interaction interface; and exiting the battery swap station to restart the parking operation.

According to a second aspect of the disclosure, a computer system for controlling vehicle parking is provided, including: a memory; a processor; and a computer program stored on the memory and executable on the processor, where the execution of the computer program causes the following steps to be performed: receiving, from a battery swap station, a vehicle parking state signal generated in real time in response to a vehicle starting to perform a parking operation; and performing a parking control operation based on the received vehicle parking state signal, where the parking control operation includes adjusting a parking path to guide the vehicle to an in-station predetermined battery swap area and stopping the parking operation.

According to the computer system for controlling vehicle parking in an embodiment of the disclosure, where the execution of the computer program further causes the following steps to be performed: adjusting the parking path when it is determined, based on the received vehicle parking state signal, that the vehicle is parked out of position, such that the vehicle enters the in-station predetermined battery swap area; or stopping the parking operation when it is determined, based on the received vehicle parking state signal, that the vehicle is parked in position; and sending an in-position parking signal to the battery swap station.

According to the computer system for controlling vehicle parking in an embodiment or any one of the above embodiments of the disclosure, where the execution of the computer program further causes the following steps to be performed: adjusting the parking path when it is determined, based on the received vehicle parking state signal, that the vehicle is parked out of position; stopping the parking operation in response to determining that the vehicle cannot enter the in-station predetermined battery swap area by adjusting the parking path; sending a parking cancellation signal to the battery swap station and displaying the parking cancellation signal through a vehicle-machine interaction interface; and exiting the battery swap station to restart the parking operation.

According to the computer system for controlling vehicle parking in an embodiment or any one of the above embodiments of the disclosure, where the vehicle parking state signal is generated in the following manners: using one or more image collection devices arranged in the battery swap station to collect a wheel image of the vehicle; using a machine learning model to process the collected wheel image of the vehicle; and generating the vehicle parking state signal based on a processing result of the machine learning model.

According to the computer system for controlling vehicle parking in an embodiment or any one of the above embodiments of the disclosure, where the vehicle parking state signal indicates one or more of the following: in-position parking, out-of-position parking, a positional relationship between the vehicle and the in-station predetermined battery swap area, and a distance between the vehicle and the in-station predetermined battery swap area.

According to the computer system for controlling vehicle parking in an embodiment or any one of the above embodiments of the disclosure, where content indicated by the vehicle parking state signal is selected, based on a frequency of communication between the battery swap station and the vehicle, from a group consisting of one or more of the following: in-position parking, out-of-position parking, the positional relationship between the vehicle and the in-station predetermined battery swap area, and the distance between the vehicle and the in-station predetermined battery swap area.

According to the computer system for controlling vehicle parking in an embodiment or any one of the above embodiments of the disclosure, where the content indicated by the vehicle parking state signal is selected in the following manners: when the frequency of communication between the battery swap station and the vehicle is within a first frequency range, the vehicle parking state signal indicates in-position parking and out-of-position parking; when the frequency of communication between the battery swap station and the vehicle is within a second frequency range, the vehicle parking state signal indicates in-position parking, out-of-position parking, and the positional relationship between the vehicle and the in-station predetermined battery swap area; and when the frequency of communication between the battery swap station and the vehicle is within a third frequency range, the vehicle parking state signal indicates in-position parking, out-of-position parking, the positional relationship between the vehicle and the in-station predetermined battery swap area, and the distance between the vehicle and the in-station predetermined battery swap area.

According to the computer system for controlling vehicle parking in an embodiment or any one of the above embodiments of the disclosure, where the parking operation includes an automatic parking operation, a semi-automatic parking operation, and a manual parking operation.

According to the computer system for controlling vehicle parking in an embodiment or any one of the above embodiments of the disclosure, where the execution of the computer program further causes the following steps to be performed: stopping the parking operation in response to not receiving, within a predetermined period of time, the vehicle parking state signal that indicates in-position parking; sending an alarm signal to the battery swap station and displaying the alarm signal through a vehicle-machine interaction interface; and exiting the battery swap station to restart the parking operation.

According to a third aspect of the disclosure, a computer storage medium including instructions is provided, where when the instructions are run, the steps of the method for controlling vehicle parking according to the first aspect of the disclosure are performed.

According to a fourth aspect of the disclosure, a vehicle is provided, including the computer system for controlling vehicle parking according to the second aspect of the disclosure.

According to the solution for controlling vehicle parking in one or more embodiments of the disclosure, a parking state signal of a vehicle entering the battery swap station can be notified in real time by establishing interaction between the battery swap station and the vehicle entering the battery swap station, such that the vehicle entering the battery swap station stops a parking operation in time when it is parked in position, or actively cancels the parking operation and exits the battery swap station in the case of abnormal parking, to re-perform the parking operation. Therefore, the damage to the battery swap station (for example, various mechanical structures and devices in the battery swap station) or the vehicle entering the battery swap station caused by an improper parking operation may be avoided, and the labor cost of the battery swap station is reduced while improving the battery swapping efficiency and user experience.

### Brief Description of the Drawings

The above-mentioned and/or other aspects and advantages of the disclosure will become more apparent and more readily appreciated from the following description of various aspects in conjunction with the accompanying drawings, in which the same or similar units are denoted by the same reference numerals. In the accompanying drawings:
FIG. 1 is a flowchart of a method for controlling vehicle parking according to one or more embodiments of the disclosure;
FIG. 2 is a flowchart of a method for controlling vehicle parking according to one or more embodiments of the disclosure;
FIG. 3 is a schematic block diagram of a computer system for controlling vehicle parking according to one or more embodiments of the disclosure; and
FIG. 4A to FIG. 4C are schematic diagrams of positional relationships between a vehicle and an in-station predetermined battery swap area according to one or more embodiments of the disclosure.

### Detailed Description of Embodiments

The following descriptions of the specific embodiments are merely exemplary in nature, and are not intended to limit the disclosed technologies or the application and use of the disclosed technologies. In addition, there is no intention to be bound by any expressed or implied theory presented in the foregoing Technical Field and Background Art, or the following Detailed Description.

In the following detailed descriptions of the embodiments, many specific details are set forth to provide a more thorough understanding of the disclosed technologies. However, it is obvious for those of ordinary skill in the art that the disclosed technologies may be practiced without these specific details. In other instances, well-known features are not detailed, to avoid complicating the descriptions unnecessarily.

The terms such as "include" and "comprise" are used to indicate that in addition to the units and steps that are directly and clearly described in this specification, other units and steps that are not directly or clearly described are not excluded in the technical solutions of the disclosure. The terms such as "first" and "second" are not used to indicate sequences of units in terms of time, space, size, etc., and are merely used to distinguish between the units.

Various exemplary embodiments according to the disclosure will be described below in detail with reference to the accompanying drawings.

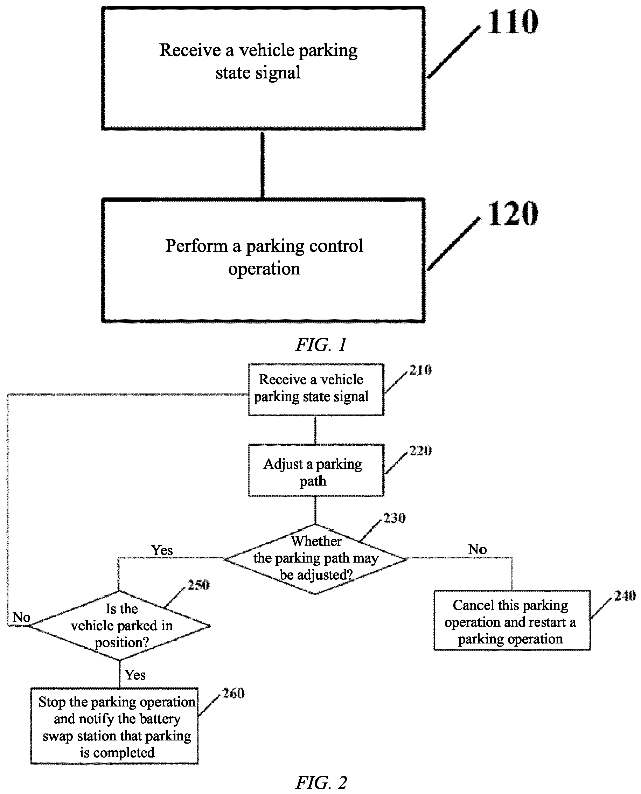

FIG. 1 is a flowchart of a method for controlling vehicle parking according to one or more embodiments of the disclosure.

As shown in FIG. 1, in step 110, a vehicle parking state signal generated in real time in response to a vehicle starting to perform a parking operation is received from a battery swap station. Optionally, the parking operation herein may include but is not limited to an automatic parking operation, a semi-automatic parking operation, and a manual parking operation.

Optionally, after the vehicle to be battery swapped starts the parking operation, the battery swap station may start one or more image collection devices (for example, cameras) arranged in the battery swap station to collect a wheel image of the vehicle, a machine learning model is used to process the collected wheel image of the vehicle, and the vehicle parking state signal is generated based on a processing result of the machine learning model. Exemplarily, the machine learning model herein may be understood as any one of models based on deep learning or machine learning, for example, a neural network model, a convolutional neural network model, or a recurrent neural network model. Herein, the convolutional neural network model can be implemented, for example, in the form of VGGNet, GoogleNet, ResNet, DenseNet, or the like.

Optionally, the vehicle parking state signal may indicate, but is not limited to, one or more of the following: in-position parking, out-of-position parking, a positional relationship between the vehicle and the in-station predetermined battery swap area, and a distance between the vehicle and the in-station predetermined battery swap area. Exemplarily, content indicated by the vehicle parking state signal is selected, based on a frequency of communication between the battery swap station and the vehicle, from a group consisting of one or more of the following: in-position parking, out-of-position parking, the positional relationship between the vehicle and the in-station predetermined battery swap area, and the distance between the vehicle and the in-station predetermined battery swap area. For example, the content indicated by the vehicle parking state signal is selected in the following manners: when the frequency of communication between the battery swap station and the vehicle is within a first frequency range, the vehicle parking state signal may indicate in-position parking and out-of-position parking; when the frequency of communication between the battery swap station and the vehicle is within a second frequency range, the vehicle parking state signal may indicate in-position parking, out-of-position parking, and the positional relationship between the vehicle and the in-station predetermined battery swap area; and when the frequency of communication between the battery swap station and the vehicle is within a third frequency range, the vehicle parking state signal may indicate in-position parking, out-of-position parking, the positional relationship between the vehicle and the in-station predetermined battery swap area, and the distance between the vehicle and the in-station predetermined battery swap area.

In step 120, a parking control operation is performed based on the received vehicle parking state signal, where the parking control operation may include adjusting a parking path to guide the vehicle to an in-station predetermined battery swap area and stopping the parking operation.

In an example, in a scenario where the frequency of communication between the battery swap station and the vehicle is lower than 2 Hz, the vehicle parking state signal may indicate in-position parking and out-of-position parking. When the received vehicle parking state signal indicates in-position parking, the vehicle may stop the parking operation and send an in-position parking signal to the battery swap station. When the received vehicle parking state signal indicates out-of-position parking, the vehicle may cancel this parking operation and exit the battery swap station to restart the parking operation. Alternatively, when the received vehicle parking state signal indicates out-of-position parking, the vehicle may prompt the driver and the passenger to take over the vehicle for a parking operation or instruct the staff of the battery swap station to help guiding the parking operation. Exemplarily, in a case where a current parking condition cannot be determined or after the parking operation is completed, the vehicle may establish a communication connection with the battery swap station to receive the vehicle parking state signal from the battery swap station, thereby reducing communication resource overheads between the battery swap station and the vehicle.

In an example, in a scenario where the frequency of communication between the battery swap station and the vehicle is between 2 Hz and 4 Hz, the vehicle parking state signal may indicate in-position parking, out-of-position parking, and the positional relationship between the vehicle and the in-station predetermined battery swap area (for example, the vehicle being in the front or in the back of the in-station predetermined battery swap area). When the received vehicle parking state signal indicates in-position parking, the vehicle may stop the parking operation and send an in-position parking signal to the battery swap station. When the received vehicle parking state signal indicates out-of-position parking, the vehicle may enter the in-station predetermined battery swap area at an extremely low speed (for example, 0.2 m/s) based on the positional relationship between the vehicle and the in-station predetermined battery swap area (for example, the vehicle being in the front or in the back of the in-station predetermined battery swap area) that is indicated by the vehicle parking state signal. Exemplarily, after the parking operation is performed based on the parking path for a predetermined period of time, the vehicle may establish a communication connection with the battery swap station to receive the vehicle parking state signal from the battery swap station, thereby avoiding or reducing a communication delay between the battery swap station and the vehicle.

In an example, in a scenario where the frequency of communication between the battery swap station and the vehicle is higher than 10 Hz, the vehicle parking state signal may indicate in-position parking, out-of-position parking, the positional relationship between the vehicle and the in-station predetermined battery swap area (for example, the vehicle being in the front or in the back of the in-station predetermined battery swap area), and the distance between the vehicle and the in-station predetermined battery swap area (for example, a distance between a geometric center position of the vehicle and a geometric center position of the in-station predetermined battery swap area). When the received vehicle parking state signal indicates in-position parking, the vehicle may stop the parking operation and send an in-position parking signal to the battery swap station. When the received vehicle parking state signal indicates out-of-position parking, the vehicle may enter the in-station predetermined battery swap area at an extremely low speed (for example, less than 0.5 m/s) based on the positional relationship between the vehicle and the in-station predetermined battery swap area (for example, the vehicle being in the front or in the back of the in-station predetermined battery swap area) that is indicated by the vehicle parking state signal and the distance between the vehicle and the in-station predetermined battery swap area (for example, a distance between a geometric center position of the vehicle and a geometric center position of the in-station predetermined battery swap area), and optionally in combination with sensor data (for example, an engine signal, a vehicle speed signal, a wheel speed signal, a steering wheel torque signal, a steering wheel angle signal, an angular yaw velocity signal, or the like) of the vehicle itself. Exemplarily, when the parking operation is started, the vehicle may establish a communication connection with the battery swap station to receive the vehicle parking state signal from the battery swap station, thereby improving the accuracy of the in-position parking detection of the vehicle entering the battery swap station and enabling the vehicle entering the battery swap station to stop the parking operation in time when it is parked in position.

FIG. 2 is a flowchart of a method for controlling vehicle parking according to one or more embodiments of the disclosure.

As shown in FIG. 2, in step 210, a vehicle parking state signal generated in real time in response to a vehicle starting to perform a parking operation is received from a battery swap station.

Optionally, after the vehicle to be battery swapped starts the parking operation, the battery swap station may start one or more image collection devices (for example, cameras) arranged in the battery swap station to collect a wheel image of the vehicle, a machine learning model is used to process the collected wheel image of the vehicle, and the vehicle parking state signal is generated based on a processing result of the machine learning model.

Optionally, the vehicle parking state signal may indicate, but is not limited to, one or more of the following: in-position parking, out-of-position parking, a positional relationship between the vehicle and the in-station predetermined battery swap area, and a distance between the vehicle and the in-station predetermined battery swap area. As described above, content indicated by the vehicle parking state signal may be selected, based on a frequency of communication between the battery swap station and the vehicle, from a group consisting of one or more of the following: in-position parking, out-of-position parking, the positional relationship between the vehicle and the in-station predetermined battery swap area, and the distance between the vehicle and the in-station predetermined battery swap area. For example, the content indicated by the vehicle parking state signal is selected in the following manners: when the frequency of communication between the battery swap station and the vehicle is within a first frequency range, the vehicle parking state signal may indicate in-position parking and out-of-position parking; when the frequency of communication between the battery swap station and the vehicle is within a second frequency range, the vehicle parking state signal may indicate in-position parking, out-of-position parking, and the positional relationship between the vehicle and the in-station predetermined battery swap area; and when the frequency of communication between the battery swap station and the vehicle is within a third frequency range, the vehicle parking state signal may indicate in-position parking, out-of-position parking, the positional relationship between the vehicle and the in-station predetermined battery swap area, and the distance between the vehicle and the in-station predetermined battery swap area.

Optionally, the vehicle may establish a communication connection with the battery swap station at a specific moment to receive the vehicle parking state signal from the battery swap station, thereby saving the communication resource overhead between the battery swap station and the vehicle. For example, in a case where a current parking condition cannot be determined or after the parking operation is completed, the vehicle may establish a communication connection with the battery swap station to receive the vehicle parking state signal from the battery swap station, or alternatively, after the parking operation is performed based on the parking path for a predetermined period of time, the vehicle may establish a communication connection with the battery swap station to receive the vehicle parking state signal from the battery swap station, or alternatively, when the parking operation is started, the vehicle may establish a communication connection with the battery swap station to receive the vehicle parking state signal from the battery swap station.

In step 220, a parking path is adjusted when it is determined, based on the received vehicle parking state signal, that the vehicle is parked out of position, such that the vehicle enters the in-station predetermined battery swap area. Exemplarily, the vehicle parking state signal may indicate in-position parking, out-of-position parking, the positional relationship between the vehicle and the in-station predetermined battery swap area (for example, the vehicle being in the front or in the back of the in-station predetermined battery swap area), and the distance between the vehicle and the in-station predetermined battery swap area (for example, a distance between a geometric center position of the vehicle and a geometric center position of the in-station predetermined battery swap area). When the received vehicle parking state signal indicates out-of-position parking, the vehicle may adjust the parking path based on the positional relationship between the vehicle and the in-station predetermined battery swap area (for example, the vehicle being in the front or in the back of the in-station predetermined battery swap area) and the distance between the vehicle and the in-station predetermined battery swap area (for example, a distance between a geometric center position of the vehicle and a geometric center position of the in-station predetermined battery swap area), and optionally in combination with sensor data (for example, an engine signal, a vehicle speed signal, a wheel speed signal, a steering wheel torque signal, a steering wheel angle signal, an angular yaw velocity, or the like) of the vehicle itself, so that the vehicle enters the in-station predetermined battery swap area at an extremely speed (for example, less than 0.5 m/s). However, it may be understood that the vehicle may not be able to enter the in-station predetermined battery swap area at one time by adjusting the current parking path, and therefore it is necessary to further determine whether the vehicle can enter the in-station predetermined battery swap area by adjusting the parking path.

In step 230, whether the vehicle can enter the in-station predetermined battery swap area by adjusting the parking path is determined. When it is determined that the vehicle cannot enter the in-station predetermined battery swap area by adjusting the parking path, step 240 is performed.

In step 240, the vehicle cancels this parking operation and sends a parking cancellation signal to the battery swap station, displays the parking cancellation signal to the driver and the passenger through a vehicle-machine interaction interface, and exits the battery swap station to restart a parking operation.

When it is determined that the vehicle can enter the in-station predetermined battery swap area by adjusting the parking path, step 250 is performed.

In step 250, whether the vehicle parking state signal indicating in-position parking is received is determined. When the vehicle parking state signal indicating in-position parking is not received, step 210 is performed again to continue the operations of steps 210 to 250. When the vehicle parking state signal indicating in-position parking is received, step 260 is performed.

Optionally, in step 250, when the vehicle parking state signal indicating in-position parking is not received within a predetermined period of time (for example, due to that the vehicle cannot be parked in position, the vehicle parking state signal cannot be generated or generated incorrectly, the image collection device fails, or the like), the parking operation is stopped, an alarm signal is sent to the battery swap station and the alarm signal is displayed through the vehicle-machine interaction interface, and the vehicle exits the battery swap station to restart the parking operation.

In step 260, the parking operation is stopped and an in-position parking signal is sent to the battery swap station when it is determined, based on the received vehicle parking state signal, that the vehicle is parked in position.

According to the method for controlling vehicle parking proposed in an aspect of the disclosure, a parking state signal of a vehicle entering the battery swap station can be notified in real time by establishing interaction between the battery swap station and the vehicle entering the battery swap station, such that the vehicle entering the battery swap station stops a parking operation in time when it is parked in position, or actively cancels the parking operation and exits the battery swap station in the case of abnormal parking, to re-perform the parking operation. Therefore, the damage to the battery swap station (for example, various mechanical structures and devices in the battery swap station) or the vehicle entering the battery swap station caused by an improper parking operation may be avoided, and the labor cost of the battery swap station is reduced while improving the battery swapping efficiency and user experience.

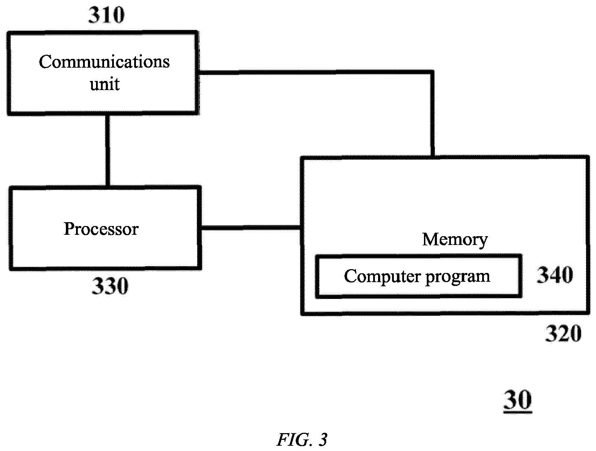

FIG. 3 is a schematic block diagram of a computer system for controlling vehicle parking according to one or more embodiments of the disclosure.

As shown in FIG. 3, the computer system 30 for controlling vehicle parking includes a communications unit 310, a memory 320 (for example, a non-volatile memory such as a flash memory, a ROM, a hard disk drive, a magnetic disk, an optical disc, and the like), a processor 330, and a computer program 340 stored on the memory 320 and executable on the processor 330.

The communications unit 310, as a communications interface, is configured to establish a communication connection between the computer system 30 and an external device or network (for example, a battery swap station, a remote server, or the like).

The memory 320 stores the computer program 340 executable by the processor 330. The processor 330 is configured to execute the computer program 340 to implement the method for controlling vehicle parking according to one or more embodiments of the disclosure.

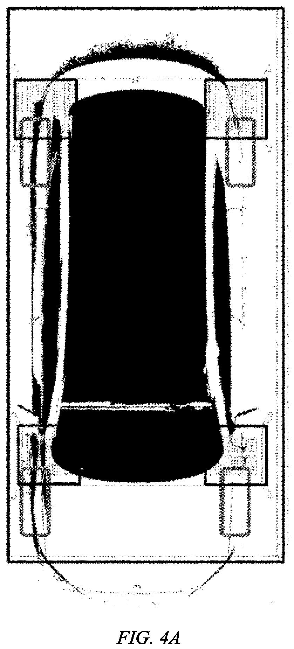

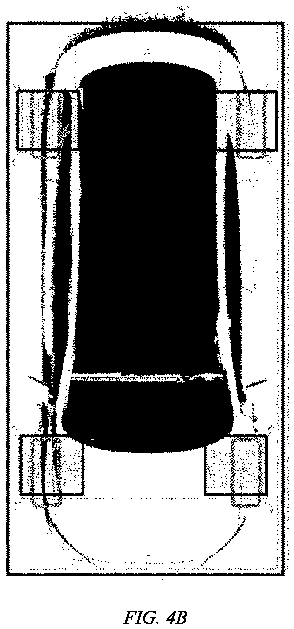

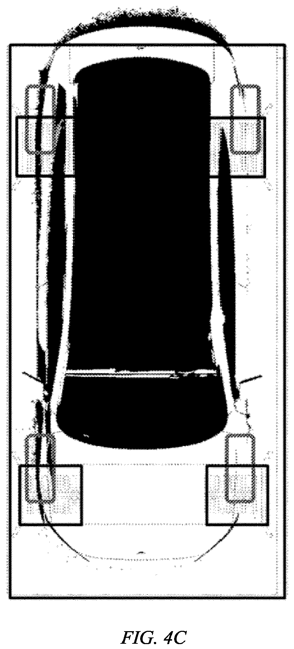

FIG. 4A to FIG. 4C are schematic diagrams of positional relationships between a vehicle and an in-station predetermined battery swap area according to one or more embodiments of the disclosure. FIG. 4A to FIG. 4C show, in the form of top views, positional relationships between a vehicle and an in-station predetermined battery swap area, which may include, for example, the vehicle being in the front of, in the back of, and in the center of the in-station predetermined battery swap area. FIG. 4A shows that the positional relationship between the vehicle and the in-station predetermined battery swap area is the vehicle being in the front of the in-station predetermined battery swap area, FIG. 4B shows that the positional relationship between the vehicle and the in-station predetermined battery swap area is the vehicle being in the center of the in-station predetermined battery swap area (that is, being parked in position), and FIG. 4C shows that the positional relationship between the vehicle and the in-station predetermined battery swap area is the vehicle being in the back of the in-station predetermined battery swap area.

As shown in FIG. 4A to FIG. 4C, the large rectangle in each figure represents the in-station predetermined battery swap area (for example, a battery swap platform), the four small rectangles in each figure represent the wheel positions, and the four small squares in each figure represent the preset positions of wheel fixing devices in the battery swap platform.

Exemplarily, in the process of using a machine learning model to process the collected wheel image of the vehicle and generating the vehicle parking state signal based on a processing result of the machine learning model, if the wheel center areas respectively reach the preset positions of the wheel fixing devices in the battery swap platform in the collected wheel image of the vehicle, a vehicle parking state signal indicating in-position parking is generated. If the wheel center areas respectively do not reach the preset positions of the wheel fixing devices in the battery swap platform in the collected wheel image of the vehicle, a vehicle parking state signal indicating out-of-position parking is generated. In addition, a vehicle parking state signal indicating a positional relationship between the vehicle and the in-station predetermined battery swap area may be generated by comparing a relationship between the wheel center areas and the preset positions of the wheel fixing devices in the battery swap platform in the collected wheel image of the vehicle.

It should be noted that, the positional relationships between the vehicle and the in-station predetermined battery swap area and the manner of generating the vehicle parking state signal described above with reference to FIG. 4A to FIG. 4C are only exemplary, without departing from the spirit and scope of the disclosure, the positional relationship between the vehicle and the in-station predetermined battery swap area and the manner of generating the vehicle parking state signal may be selected based on factors such as actual requirements and usage scenarios.

In addition, the disclosure may alternatively be implemented as a computer storage medium, which has stored therein a program for causing a computer to perform the method for controlling vehicle parking according to an aspect of the disclosure.

Here, various forms of computer storage media, such as disks (for example, a magnetic disk, an optical disc, etc.), cards (for example, a memory card, an optical card, etc.), semiconductor memories (for example, a ROM, a non-volatile memory, etc.), and tapes (for example, a magnetic tape, a cassette tape, etc.) may be used as the computer storage medium.

Various embodiments provided in the disclosure may be implemented by hardware, software, or a combination of hardware and software where applicable. In addition, without departing from the scope of the disclosure, various hardware components and/or software components described in this specification may be combined into a combined component including software, hardware, and/or both where applicable. Without departing from the scope of the disclosure, various hardware components and/or software components described in this specification may be separated into sub-components including software, hardware, or both where applicable. In addition, where applicable, it is contemplated that software components may be implemented as hardware components, and vice versa.

Software (such as program code and/or data) in the disclosure may be stored on one or more computer storage media. It is also contemplated that the software identified herein may be implemented using one or more general-purpose or special-purpose computers and/or computer systems, networked and/or otherwise. The steps described herein may be changed in order, combined into compound steps, and/or divided into sub-steps where applicable, to provide the features described herein.

The embodiments and examples proposed herein are provided to describe as adequately as possible embodiments according to the disclosure and specific applications thereof and thus enable those skilled in the art to implement and use the disclosure. However, those skilled in the art will know that the above descriptions and examples are provided only for description and illustration. The proposed description is not intended to cover all aspects of the disclosure or limit the disclosure to the disclosed precise forms.

## Claims

1. A method for controlling vehicle parking, comprising the following steps:
receiving, from a battery swap station, a vehicle parking state signal generated in real time in response to a vehicle starting to perform a parking operation; and
performing a parking control operation based on the received vehicle parking state signal, wherein the parking control operation comprises adjusting a parking path to guide the vehicle to an in-station predetermined battery swap area and stopping the parking operation,
wherein content indicated by the vehicle parking state signal is selected, based on a frequency of communication between the battery swap station and the vehicle, from a group consisting of one or more of the following: in-position parking, out-of-position parking, a positional relationship between the vehicle and the in-station predetermined battery swap area, and a distance between the vehicle and the in-station predetermined battery swap area.

2. The method according to claim 1, further comprising:
adjusting the parking path when it is determined, based on the received vehicle parking state signal, that the vehicle is parked out of position, such that the vehicle enters the in-station predetermined battery swap area; or
stopping the parking operation when it is determined, based on the received vehicle parking state signal, that the vehicle is parked in position; or and
sending an in-position parking signal to the battery swap station.

3. The method according to claim 1 or 2, further comprising:
adjusting the parking path when it is determined, based on the received vehicle parking state signal, that the vehicle is parked out of position;
stopping the parking operation in response to determining that the vehicle cannot enter the in-station predetermined battery swap area by adjusting the parking path;
sending a parking cancellation signal to the battery swap station and displaying the parking cancellation signal through a vehicle-machine interaction interface; and
exiting the battery swap station to restart the parking operation.

4. The method according to any one of claims 1 to 3, wherein the vehicle parking state signal is generated in the following manners:
using one or more image collection devices arranged in the battery swap station to collect a wheel image of the vehicle;
using a machine learning model to process the collected wheel image of the vehicle; and
generating the vehicle parking state signal based on a processing result of the machine learning model.

5. The method according to any one of claims 1, to 4 wherein the vehicle parking state signal indicates one or more of the following: in-position parking, out-of-position parking, the positional relationship between the vehicle and the in-station predetermined battery swap area, and the distance between the vehicle and the in-station predetermined battery swap area.

6. The method according to any one of claims 1 to 5, wherein the content indicated by the vehicle parking state signal is selected in the following manners:
when the frequency of communication between the battery swap station and the vehicle is within a first frequency range, the vehicle parking state signal indicates in-position parking and out-of-position parking;
when the frequency of communication between the battery swap station and the vehicle is within a second frequency range, the vehicle parking state signal indicates in-position parking, out-of-position parking, and the positional relationship between the vehicle and the in-station predetermined battery swap area; and
when the frequency of communication between the battery swap station and the vehicle is within a third frequency range, the vehicle parking state signal indicates in-position parking, out-of-position parking, the positional relationship between the vehicle and the in-station predetermined battery swap area, and the distance between the vehicle and the in-station predetermined battery swap area.

7. The method according to any one of claims 1 to 6, wherein the parking operation comprises an automatic parking operation, a semi-automatic parking operation, and a manual parking operation.

8. The method according to any one of claims 1 to 7, further comprising:
stopping the parking operation in response to not receiving, within a predetermined period of time, the vehicle parking state signal that indicates in-position parking;
sending an alarm signal to the battery swap station and displaying the alarm signal through a vehicle-machine interaction interface; and
exiting the battery swap station to restart the parking operation.

9. A computer system for controlling vehicle parking, comprising:
a memory;
a processor; and
a computer program stored on the memory and executable on the processor, wherein the execution of the computer program causes the following steps to be performed:
receiving, from a battery swap station, a vehicle parking state signal generated in real time in response to a vehicle starting to perform a parking operation; and
performing a parking control operation based on the received vehicle parking state signal, wherein the parking control operation comprises adjusting a parking path to guide the vehicle to an in-station predetermined battery swap area and stopping the parking operation,
wherein content indicated by the vehicle parking state signal is selected, based on a frequency of communication between the battery swap station and the vehicle, from a group consisting of one or more of the following: in-position parking, out-of-position parking, a positional relationship between the vehicle and the in-station predetermined battery swap area, and a distance between the vehicle and the in-station predetermined battery swap area.

10. The system according to claim 9, wherein the execution of the computer program further causes the following steps to be performed:
adjusting the parking path when it is determined, based on the received vehicle parking state signal, that the vehicle is parked out of position, such that the vehicle enters the in-station predetermined battery swap area; or
stopping the parking operation when it is determined, based on the received vehicle parking state signal, that the vehicle is parked in position; and
sending an in-position parking signal to the battery swap station.

11. The system according to claim 9 or 10, wherein the execution of the computer program further causes the following steps to be performed:
adjusting the parking path when it is determined, based on the received vehicle parking state signal, that the vehicle is parked out of position;
stopping the parking operation in response to determining that the vehicle cannot enter the in-station predetermined battery swap area by adjusting the parking path;
sending a parking cancellation signal to the battery swap station and displaying the parking cancellation signal through a vehicle-machine interaction interface; and
exiting the battery swap station to restart the parking operation.

12. The system according to claim 9, 10, or 11, wherein the vehicle parking state signal is generated in the following manners:
using one or more image collection devices arranged in the battery swap station to collect a wheel image of the vehicle;
using a machine learning model to process the collected wheel image of the vehicle; and
generating the vehicle parking state signal based on a processing result of the machine learning model.

13. The system according to any one of claims 9 to 12, wherein the vehicle parking state signal indicates one or more of the following: in-position parking, out-of-position parking, the positional relationship between the vehicle and the in-station predetermined battery swap area, and the distance between the vehicle and the in-station predetermined battery swap area.

14. The system according to any one of claims 9 to 13, wherein the content indicated by the vehicle parking state signal is selected in the following manners:
when the frequency of communication between the battery swap station and the vehicle is within a first frequency range, the vehicle parking state signal indicates in-position parking and out-of-position parking;
when the frequency of communication between the battery swap station and the vehicle is within a second frequency range, the vehicle parking state signal indicates in-position parking, out-of-position parking, and the positional relationship between the vehicle and the in-station predetermined battery swap area; and
when the frequency of communication between the battery swap station and the vehicle is within a third frequency range, the vehicle parking state signal indicates in-position parking, out-of-position parking, the positional relationship between the vehicle and the in-station predetermined battery swap area, and the distance between the vehicle and the in-station predetermined battery swap area.

15. The system according to any one of claims 9 to 14, wherein the parking operation comprises an automatic parking operation, a semi-automatic parking operation, and a manual parking operation.
